# EUROPÄISCHE PATENTANMELDUNG

(11) **EP 3 628 474 A1**
(43) Veröffentlichungstag der Anmeldung: **01.04.2020**
(21) Anmeldenummer: 19199990.3
(22) Anmeldetag: 27.09.2019
(51) Int. Cl.: B29C 70/38, B29C 70/54

(54) **VERFAHREN UND ANLAGE ZUR HERSTELLUNG EINES FASERLAMINATES AUS EINEM FASERMATERIAL EINES FASERVERBUNDWERKSTOFFES ZUR HERSTELLUNG EINES FASERVERBUNDBAUTEILS**

(30) Priorität: 28.09.2018 DE 102018124080
(71) Anmelder: Deutsches Zentrum für Luft- und Raumfahrt e.V., 51147 Köln (DE)
(72) Erfinder: Meister, Sebastian, 21680 Stade (DE); Krombholz, Christian, 21614 Buxtehude (DE)
(74) Vertreter: Gramm, Lins & Partner Patent- und Rechtsanwälte PartGmbB

(57) **Zusammenfassung**

Ein Verfahren zur Herstellung eines Faserlaminates (17) aus einem Fasermaterial (15) eines Faserverbundwerkstoffes zur Herstellung eines Faserverbundbauteils mittels einer Fertigungsanlage (10), wobei das Verfahren die folgenden Schritte umfasst:
- Zuführen von Fasermaterial (15) von mindestens einem Fasermaterialspeicher (14) der Fertigungsanlage (10) zu mindestens einem Faserlegekopf (13) der Fertigungsanlage (10) und
- Ablegen des zugeführten Fasermaterials (15) mittels des Faserlegekopfes (13) auf eine formgebende Werkzeugoberfläche,
- wobei während des Zuführens und/oder Ablegens des Fasermaterials (15) kontinuierlich Prozessdaten der Fertigungsanlage (10) erfasst werden,
wobei
- Zuführen der erfassten Prozessdaten einer Auswerteeinheit (19), die eine Wissensdatenbank enthält, in der detektierte Fertigungsabweichungen von abgelegtem Fasermaterial (15) mit Prozessdaten der Fertigungsanlage (10) korreliert sind, die sich auf einen bezüglich des Auftretens der jeweiligen Fertigungsabweichung vorhergehenden Zeitpunkt und/oder Zeitraum beim Zuführen und/oder Ablegen des Fasermaterials (15) beziehen, und
- Feststellen einer zu erwartenden Fertigungsabweichung durch Eingeben der erfassten Prozessdaten in die Wissendatenbank mit der enthaltenen Korrelation.

## Beschreibung

Aufgrund der gewichtsspezifischen Festigkeit und Steifigkeit von Faserverbundbauteilen, die aus Faserverbundwerkstoffen hergestellt sind, sind derartige Bauteile aus der Luft und Raumfahrt sowie aus dem Automobilbereich heutzutage nicht mehr wegzudenken. Bei der Herstellung eines Faserverbundbauteils wird dabei ein in ein Fasermaterial infundiertes Matrixmaterial meist unter Temperatur- und Druckbeaufschlagung ausgehärtet und bildet so nach dem Aushärten eine integrale Einheit mit dem Fasermaterial. Die Verstärkungsfasern des Fasermaterials werden hierdurch in ihre vorgegebene Richtung gezwungen und können die auftretenden Lasten in die vorgegebene Richtung abtragen.

Faserverbundwerkstoffe, aus denen derartige Faserverbundbauteile hergestellt werden, weisen in der Regel zwei Hauptbestandteile auf, nämlich zum einen ein Fasermaterial und zum anderen ein Matrixmaterial. Hierneben können noch weitere sekundäre Bestandteile verwendet werden, wie bspw. Bindermaterialien oder zusätzliche Funktionselemente, die in das Bauteil integriert werden sollen. Werden für die Herstellung trockene Fasermaterialien bereitgestellt, so wird während des Herstellungsprozesses das Matrixmaterial des Faserverbundwerkstoffes in das Fasermaterial durch einen Infusionsprozess infundiert, durch den das trockene Fasermaterial mit dem Matrixmaterial benetzt wird. Hierneben sind auch Faserverbundwerkstoffe bekannt, bei denen das Fasermaterial mit dem Matrixmaterial bereits vorimprägniert ist (sogenannte Prepregs).

Vor dem Aushärten des Matrixmaterials wird in der Regel das Fasermaterial in ein Formwerkzeug eingebracht, das mit seiner formgebenden Werkzeugoberfläche die spätere Bauteilform nachbildet. Dabei können sowohl trockene als auch vorimprägnierte Fasermaterialien in das Formwerkzeug abgelegt werden. Zur Herstellung von großskaligen Strukturbauteilen, wie bspw. Flügelschalen von Verkehrsflugzeugen, werden zur Optimierung des Ablegeverfahrens automatisierte Faserablegeprozesse verwendet, bei denen mit Hilfe einer Fertigungsanlage und mindestens einem Faserlegekopf ein dem Faserlegekopf zugeführtes quasiendloses Fasermaterial auf dem Werkzeug gedrückt und somit abgelegt. Bei der sogenannten Fiber Placement Technologie werden bspw. vorimprägnierte Fasermaterialien bahnweise auf dem Formwerkzeug mit Hilfe eines solchen Faserlegekopfes abgelegt. Der Faserlegekopf ist dabei an einem Roboter angeordnet und kann gegenüber dem Formwerkzeug relativ bewegt werden. Hierdurch können die einzelnen Faserbahnen auf der Werkzeugoberfläche schließlich abgelegt werden. Bei der Fiber Placement Technologie werden gleichzeitig mehrere, meistens 8, 16 oder 32 schmale Materialstreifen, sogenannte Tows, auf dem Formwerkzeug abgelegt. Bei der Fiber Tape Laying Technologie werden meist breite Faserbahnen (auch Tapes genannt), in der Regel 150 mm, 300 mm oder 600 mm breit mit einer Dicke von wenigen Zehntel Millimeter, mit Hilfe des Faserlegekopfes, auf dem Formwerkzeug abgelegt.

Mit Hilfe der Faserlegeköpfe und den Fasermaterialien werden dann in dem Formwerkzeug Faserlaminate, auch Faserpreformen genannt, hergestellt, bei denen schlussendlich der Prozess des Infundierens des Matrixmaterials bzw. des Aushärtens des Matrixmaterials noch nicht stattgefunden hat. Derartige Faserlaminate bilden somit das Bauteil in einem Rohzustand vor dem Aushärten des Matrixmaterials.

Derartige Faserlaminate, gerade bei großskaligen Strukturbauteilen, besteht nicht selten aus mehreren Einzellagen, die je nach Anwendungsgebiet des Bauteils auch mehr als 100 Lagen umfassen können. Zur Gewährleistung einer hohen Bauteilqualität muss die Anzahl auftretender Prozessfehler bei der Ablage des Fasermaterials (bspw. Tapes oder Tows) minimiert bzw. gänzlich verhindert werden. Das Auftreten von Prozessfehlern bzw. Fertigungsabweichungen mit großem negativen Einfluss auf die Festigkeit der Bauteilstruktur muss nach Möglichkeit vollständig im Prozess erkannt und wünschenswerter Weise auch unterbunden werden.

Aus der DE 10 2013 112 260 A1, DE 10 2013 104 545 A1 sowie DE 10 2013 104 546 A1, die aus dem Hause des Anmelders stammen, werden Verfahren zum Erkennen von Fehlstellen von auf einer Werkzeugoberfläche abgelegter Faserhalbzeuge bzw. Fasermaterialien offenbart, wobei mittels eines optischen Lichtprojektionsverfahrens, bei dem das abgelegte Fasermaterial mit einer Lichtquelle aus einem ersten Winkel beleuchtete und das von der Faseroberfläche reflektierte Licht aus einem anderen Winkel aufgenommen wird, ein Höhenprofil der Faserhalbzeugoberfläche erstellt wird. Mit Hilfe einer Bildauswerteeinheit wird dann das erstellte Höhenprofil untersucht und analysiert, um so Fehlstellen in den abgelegten Fasermaterialien detektieren zu können. Dabei kann unter anderem vorgesehen sein, dass das Ermitteln des Höhenprofils mit Hilfe des Lichtschnittverfahrens im Nachgang zum Ablegeprozess stattfindet, sodass Fertigungsabweichungen gerade abgelegter Fasermaterialien bzw. Fasermaterialabschnitten sofort erkannt werden können.

Hierdurch wird eine messtechnische Erfassung von Fertigungsabweichungen, wie bspw. Ablegefehler, im Nachlauf des Ablegeprozesses möglich, um ein nachgelagertes Qualitätssicherungssystem zu erhalten. So können Fehler erkannt und gegebenenfalls ausgebessert werden. Außerdem ist eine Dokumentation der Bauteilherstellung möglich.

Neben einer messtechnischen Erfassung ist in der Praxis die manuelle Inspektion stark verbreitet. In Abhängigkeit von der Laminatgröße, der Mitarbeiterverfügbarkeit sowie der Fehlerhäufigkeit innerhalb einer Laminatschicht werden im Mittel etwa 15 Minuten bis 30 Minuten benötigt, um die Ablage einer Laminatschicht im Hinblick auf Fertigungsabweichungen zu untersuchen. Bei Flügelschalen von Kurzstreckenflugzeugen kann die Anzahl einzelner Laminatschichten bis zu 400 betragen, woraus sich 6000 Minuten bis 12000 Minuten Anlagenstillstand pro Bauteil ergeben, die auf die händische Inspektion der automatisierten Ablage zurückzuführen ist. Ebenso ist die Inspektion durch einen Werker stark vom Erfahrungsgrad abhängig und darüber hinaus nicht in dem Maße qualitativ ausreichend, wie es die Fertigungstoleranzen eigentlich erfordern. Als Beispiel ist ein zulässiger Abstand zwischen zwei Materialbahnen von 1mm genannt, der qualitativ nur unter Unterwendung von Hilfsmitteln und dies auch nur stichpunktartig untersucht werden kann.

Der größte Nachteil sowohl der messtechnischen Qualitätssicherung im Nachlauf als auch der manuellen Inspektion besteht in der Tatsache, dass ein Fehler erst auftreten muss, damit dieser auch erkannt werden kann. Das Auftreten einer Fertigungsabweichung bzw. eines Fehlers im Fertigungsprozess verursacht erhebliche Material- und Personalkosten für die nachgeschaltete Kontrolle und ggf. Reparaturen an der Produktionsanlage bzw. dem zu fertigenden Bauteil.

Vor diesem Hintergrund ist es Aufgabe der vorliegenden Erfindung, ein verbessertes Verfahren sowie eine verbesserte Fertigungsanlage anzugeben, mit der es möglich wird, Fertigungsabweichungen bei der Faserablage zu verhindern, bzw. deren Auswirkungen so niedrig wie möglich zu halten.

Die Aufgabe wird mit dem Verfahren gemäß Anspruch 1 sowie der Fertigungsanlage gemäß Anspruch 9 erfindungsgemäß gelöst.

Gemäß Anspruch 1 wird ein Verfahren zur Herstellung eines Faserlaminates aus einem Fasermaterial eines Faserverbundwerkstoffes zur Herstellung eines Faserverbundbauteils mittels einer Fertigungsanlage vorgeschlagen, wobei mit Hilfe der Fertigungsanlage ein Fasermaterial lagenweise auf dem Formwerkzeug abgelegt wird. Bei dem Fasermaterial kann es sich um trockenes oder vorimprägniertes Fasermaterial handeln. Darüber hinaus kann es sich bei dem Fasermaterial um Tapes oder Tows handeln. Durch Aushärten des Matrixmaterials des Faserverbundwerkstoffes, welches sich in dem Fasermaterial auf dem abgelegten Formwerkzeug befindet, kann schlussendlich das Faserverbundbauteil hergestellt werden.

Zur Herstellung des Faserlaminates (Faserpreform) werden von mindestens einem Fasermaterialspeicher der Fertigungsanlage das Fasermaterial zu mindestens einem Faserlegekopf der Fertigungsanlage transportiert und diesem Faserlegekopf zugeführt, wobei mit Hilfe des Faserlegekopfes dann das Fasermaterial, welches ihm zugeführt wurde, auf dem Formwerkzeug abgelegt wird. Hierfür weist der Faserlegekopf gattungsgemäß eine Ablegerolle auf, der das zugeführte Fasermaterial so zugeführt wird, dass das Fasermaterial auf das Formwerkzeug gedrückt wird.

Während des kontinuierlichen Zuführens von dem meist quasiendlosem Fasermaterial zu dem Faserlegekopf und dem kontinuierlichen Ablegen des Fasermaterials auf der Werkzeugoberfläche werden permanent Prozessdaten der Fertigungsanlage erfasst die ggf. in einem Datenspeicher hinterlegt werden können. Derartige Prozessdaten können bspw. aus der Steuerung einer robotischen Legeeinheit stammen und insbesondere Positions- und Geschwindigkeitsdaten des TCP des Roboters, Kräfte, Winkel und Winkelgeschwindigkeiten der robotischen Achsen, Informationen über die verwendeten Heizparameter, Förderdaten des Materials, Werkstückinformationen und Systemzeiten enthalten.

Erfindungsgemäß ist nun vorgesehen, dass derartige Prozessdaten der Fertigungsanlage, also jene prozessbezogenen Daten, die teilweise oder vollständig beim Zuführen und Ablegen des Fasermaterials in der Fertigungsanlage und der Steuerung bzw. Sensorik entstehen, einer Auswerteeinheit zugeführt werden, welche zur Analyse zum Zwecke der Erkennung von zu erwartenden Fertigungsabweichungen ausgebildet ist. Hierfür enthält die Auswerteeinheit eine Wissensdatenbank, der detektierte Fertigungsabweichungen von abgelegtem Fasermaterial mit Prozessdaten der Fertigungsanlage korreliert sind oder korrelierbar sind, die sich auf einen bzgl. des Auftretens der jeweiligen Fertigungsabweichung vorhergehenden Zeitpunkt und/oder Zeitraum im Zuführungen und/oder Ablegen des Fasermaterials beziehen.

Die Wissensdatenbank kann in einer Ausführungsform bereits aus vorangegangenen Fertigungsprozessen aufgebaut sein, wobei es nicht notwendigerweise immer das gleiche Bauteil sein muss. Denkbar ist aber auch, dass für jeden Fertigungsprozess, wie später noch dargelegt wird, während des individuellen Fertigungsprozesses eine eigene Wissensdatenbank aufgebaut wird, in der die im Prozess aufgetretenen Fertigungsabweichungen mit den jeweiligen Prozessdaten korreliert werden, wodurch das Ablegeverfahren über den gesamten Ablegeprozess immer besser wird. Die Wissensdatenbank enthält demzufolge eine Korrelation von aufgetretenen Fertigungsabweichungen (bspw. Prozessfehler bzgl. der Faserablage) mit Prozessdaten, die vor der Ablage des Fasermaterialabschnittes erfasst wurden und somit in der Zeitachse vor dem eigentlichen Auftreten des Fehlers bzw. der Fertigungsabweichung liegen.

Die der Auswerteeinheit nunmehr zugeführten aktuellen Prozessdaten des aktuellen Fertigungsprozesses werden nun mit Hilfe der Auswerteeinheit analysiert, indem die zugeführten Prozessdaten in die Wissensdatenbank eingegeben werden. Aufgrund der Korrelation kann die Wissensdatenbank, bspw. ein künstliches neuronales Netz, das zukünftige Auftreten einer Fertigungsabweichung feststellen, nämlich dann, wenn die Prozessdaten mit einer entsprechenden Fertigungsabweichung korrelieren und dies zuvor bereits der Wissensdatenbank einmal angelernt wurde. Wird nun festgestellt, dass die Prozessdaten mit hinreichend hoher Wahrscheinlichkeit zu dem Auftreten einer entsprechenden Fertigungsabweichung führen, so stellt dies die Auswerteeinheit fest und kann dann eine entsprechende Systemreaktion generieren.

Mit Hilfe der vorliegenden Erfindung wird es somit möglich, Fertigungsabweichungen, wie bspw. Ablegefehler (Falten, Twists, Lücken zwischen benachbarten Bahnen) so rechtzeitig festzustellen, dass gegebenenfalls noch ein Eingriff möglich ist. Es werden somit zukünftige Fertigungsabweichungen anhand aktueller Prozessdaten erkennbar, noch bevor sie eigentlich entstehen. Damit wird ein präventives Qualitätssicherungssystem geschaffen, das auftretende Fertigungsabweichungen nicht nur erkennt, sondern aktiv verhindern kann.

Die Erfinder haben dabei erkannt, dass sich aus der Korrelation von aufgetretenen Fertigungsabweichungen und den zuvor bestehenden Prozessdaten Muster derart erkennen lassen, dass sich hieraus zukünftig zu erwartende Fertigungsabweichungen allein anhand der erfassten Prozessdaten feststellen lassen.

In einer weiterbildenden Ausführungsform werden mittels einer Detektionsvorrichtung während des Ablegens des Fasermaterials wenigstens eine Fertigungsabweichung bei bereits abgelegtem Fasermaterial detektiert, wobei die detektierte Fertigungsabweichung und die erfassten Prozessdaten, die sich auf den bzgl. des Auftretens der detektierten Fertigungsabweichung vorhergehenden Zeitpunkt und/oder Zeitraum beim Zuführen und/oder Ablegen des Fasermaterials beziehen, der Auswerteeinheit zugeführt wird.

Die Auswerteeinheit korreliert nun die erhaltene Fertigungsabweichung mit den diesbezüglichen zuvor erfassten Prozessdaten, sodass die Wissensdatenbank nunmehr hinsichtlich der aufgetretenen Fertigungsabweichung weitergelernt wurde. Treten im weiteren Ablegeprozess ähnliche Situationen auf, in denen die Fertigungsanlage ähnliche oder identische Prozessdaten generiert, so würde die Wissensdatenbank aufgrund der nunmehr angelernten Korrelation auf einen zukünftig zu erwartende Fertigungsabweichung schließen und die Auswerteeinheit würde diese feststellen.

Dabei kann ein maschinelles Lernverfahren verwendet werden, mit dem die Wissensdatenbank die Korrelation zwischen Fertigungsabweichung und Prozessdaten erlernt. Hierfür eignen sich, wie bereits angesprochen, künstliche neuronale Netze, um eine derartige Beziehung zwischen Prozessdaten und Fertigungsabweichung erlernen zu können.

Der Auswerteeinheit können weiterhin Daten aus dem Live Data Sheet des herzustellenden Bauteils, Daten aus der Bauteilkonstruktion, Daten aus der Ablageprogrammierung (Offline-Programmierung) und/oder anderen prozessbezogenen Daten bereitgestellt werden oder sind bereits in der Wissensdatenbank mit aufgenommen. Hierdurch lässt sich der Feststellungsprozess bzgl. der Feststellung einer zu erwartenden Fertigungsabweichung verbessern.

Bei Feststellung einer zu erwartenden Fertigungsabweichung durch die Auswerteeinheit kann diese eine entsprechende Systemreaktion generieren, die geeignet ist, die zu erwartende Fertigungsabweichung zu vermeiden oder die Auswirkung der Fertigungsabweichung zumindest zu verringern. Die so generierte Systemreaktion wird dann der Fertigungsanlage bereitgestellt, um die Steuerung der Fertigungsanlage während des kontinuierlichen Ablegeprozesses so zu beeinflussen, dass die erwartete Fertigungsabweichung vermieden oder zumindest verringert wird.

Die von der Auswerteeinheit generierte Systemreaktion kann vor deren Umsetzung einem Evaluationsmodul bzw. einer Evaluationseinheit zugeführt werden, wobei die Evaluationseinheit die generierte Systemreaktion hinsichtlich ihrer Eignung zur Vermeidung oder Verringerung der zu erwartenden Fertigungsabweichung evaluiert. Dabei kann mit Hilfe der Evaluationseinheit die Güte der Verbesserung bei der Vermeidung oder Verringerung der zu erwartenden Fertigungsabweichung im Vorfeld bestimmt werden, wobei in Abhängigkeit des Evaluationsergebnisses die Auswerteeinheit entweder eine abgeänderte Systemreaktion generiert, um die Fertigungsabweichung zu vermeiden bzw. zu verringern oder die zuvor generierte Systemreaktion wird dann der Fertigungsanlage zum Zwecke der Umsetzung bereitgestellt. Der iterative Prozessschritt zum Auffinden einer geeigneten Systemreaktion kann dabei solange wiederholt werden, bis ein Abbruchkriterium erfüllt ist (bspw. eine bestimmte Anzahl von ermittelten Systemreaktionen oder Überschreiten des Evaluationsergebnisses über einem Schwellwert).

Hierdurch wird es möglich, nicht nur eine zu erwartende Fertigungsabweichung zu detektieren, sondern auch eine bestmögliche Reaktion zur Vermeidung der zu erwartenden Fertigungsabweichung zu generieren.

Bei dem erfindungsgemäßen Verfahren können Prozessdaten bis weniger als 1 Sekunde, vorzugsweise bis weniger als 0,5 Sekunden vor der Ablage eines konkreten Fasermaterialabschnittes berücksichtigt werden. Dies ist in der Regel der Zeitpunkt, dem ein Eingriff in die Fertigungsanlage zur Vermeidung der Fertigungsabweichung nicht mehr möglich ist. Darüber hinaus können Prozessdaten ab 15 Sekunden, vorzugsweise ab 12 Sekunden, vor der Ablage des konkreten Fasermaterialabschnittes zur Feststellung einer zu erwartenden Fertigungsabweichung berücksichtigt werden. Es wurde erkannt, dass Prozessdaten, die noch früher erfasst wurden, in der Regel nur einen sehr geringen Einfluss auf die zu erwartende Fertigungsabweichung haben.

Bei dem erfindungsgemäßen Verfahren können dabei eine Vielzahl von Fasermaterialabschnitten, die hintereinander abgelegt werden sollen, bzgl. einer zu erwartenden Fertigungsabweichung parallel überwacht werden, was nicht zuletzt auch in dem zu berücksichtigenden Zeitraum für die Prozessdaten begründet liegt. Denn in der Regel ist ein Fasermaterialabschnitt, der als Fragment des quasiendlosen Fasermaterials überwacht wird, zeitlich schneller abgelegt als der Zeitraum, in dem die Prozessdaten, die für diese Ablagen im Hinblick auf die Korrelation berücksichtigt werden, erfasst werden.

Die Aufgabe wird im Übrigen auch mit der Fertigungsanlage gemäß Anspruch 9 erfindungsgemäß gelöst, wobei die Fertigungsanlage zur Durchführung des zuvor beschriebenen Fertigungsverfahrens ausgebildet ist.

Unter einer Fertigungsabweichung werden insbesondere Fehler bei der Ablage des Fasermaterials verstanden, wie bspw. Falten, Lücken zwischen benachbarten Bahnen, Abweichungen von einer vorgegebenen Sollbahn sowie Twists.

Unter einem Detektionsprozess zur Detektion von derartigen Fertigungsabweichungen mittels einer Detektionsvorrichtung werden insbesondere Vorrichtungen verstanden, welche die Fertigungsabweichung im Nachlauf der Faserablage erkennen können. Derartige Detektionsvorrichtungen sind bspw. aus dem oben zitierten Stand der Technik bekannt und können eine Fertigungsabweichung im Nachlauf bspw. mit Hilfe eines Laserlichtschnittsensors bzw. eines Lichtprojektionsverfahrens detektieren.

Die Erfindung wird anhand der beigefügten Figuren beispielhaft näher erläutert. Es zeigen:
- Figur 1: schematische Darstellung der erfindungsgemäßen Fertigungsanlage;
- Figur 2: strukturelle Darstellung des erfindungsgemäßen präventiven QS-Systems;
- Figur 3: exemplarischer Zeitverlauf beim Ablegen von Fasermaterial;
- Figur 4: Visualisierung unterschiedlicher Betrachtungsabschnitte.

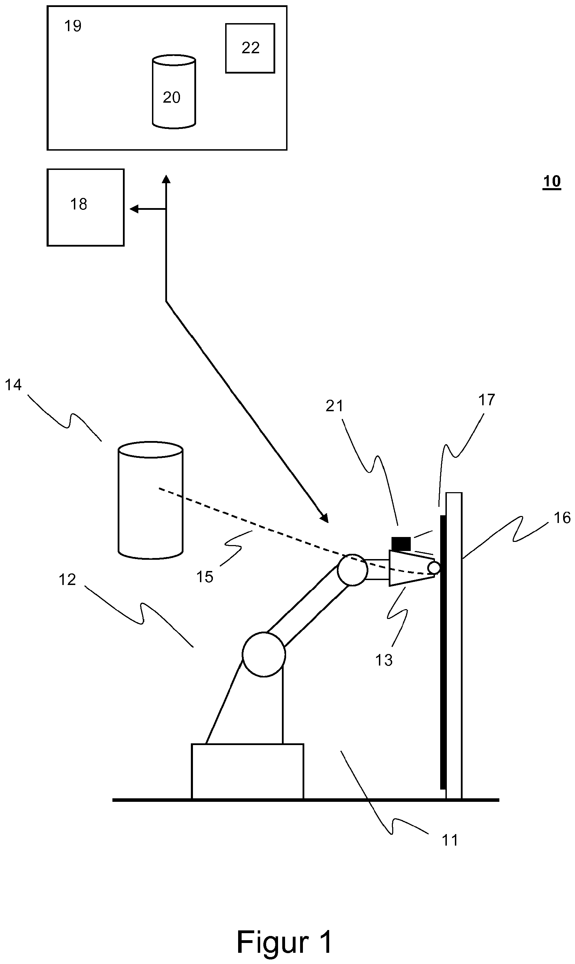

Figur 1 zeigt in einer schematisch stark vereinfachten Form die wesentlichen Elemente einer Fertigungsanlage zur Herstellung eines Faserlaminates. Die Fertigungsanlage 10 weist zunächst mindestens eine robotische Faserlegeeinheit 11 auf, die einen mehrachsigen Bewegungsautomaten 12 hat, an dem als Endeffektor ein Faserlegekopf 13 angeordnet ist. Dem Faserlegekopf 13 wird von einem Fasermagazin 14 während des Ablegeprozesses kontinuierlich ein Fasermaterial 15 zugeführt, das dann auf einem entsprechenden Formwerkzeug 16 abgelegt wird. Durch kontinuierliches Ablegen des Fasermaterials 15 auf dem Formwerkzeug 16 kann so auf dem Formwerkzeug 16 ein Faserlaminat 17 hergestellt werden, das in der Regel aus mehreren Einzellagen von Fasermaterial besteht.

Mit Hilfe einer Steuerung 18, mit der die robotische Faserlegeeinheit 11 kommunizierend in Verbindung steht, wird der Faserlegekopf 13 durch die robotische Faserlegeeinheit 11 so bewegt, dass das Fasermaterial 15 an den dafür vorgesehenen Positionen auf dem Formwerkzeug 16 abgelegt wird.

Die Fertigungsanlage 10 weist des Weiteren die erfindungsgemäße Auswerteeinheit 19 auf, die eine Wissensdatenbank 20 enthält, in der detektierte Fertigungsabweichungen von abgelegtem Fasermaterial mit Prozessdaten der Fertigungsanlage korreliert sind, die sich auf einen bzgl. des Auftretens der jeweiligen Fertigungsabweichung vorhergehenden Zeitpunkt und/oder Zeitraum beim Zuführen und/oder Ablegen des Fasermaterials beziehen.

Dabei werden die von der Fertigungsanlage 10 kontinuierlich erfassten Prozessdaten beim Ablegen des Fasermaterials 15, insbesondere jene Prozessdaten, die sich auf die robotische Faserlegeeinheit 11 sowie den Faserlegekopf 13 beziehen, an die Auswerteeinheit übertragen, wobei diese Prozessdaten dann in die Wissensdatenbank 20 eingegeben werden. Aufgrund der der Wissensdatenbank 20 angelernten Korrelation zwischen den Prozessdaten und den Fertigungsabweichungen kann die Auswerteeinheit dann feststellen, ob zukünftig eine Fertigungsabweichung beim weiteren Ablegen von Fasermaterial 15 zu erwarten ist.

Dabei kann die robotische Faserlegeeinheit an ihrem Faserlegekopf 13 eine Detektionseinrichtung 21 aufweisen, die im Nachgang bzw. Nachlauf zu dem abgelegten Fasermaterial entsprechende Fertigungsabweichungen an dem abgelegten Fasermaterial feststellen kann. Eine solche Detektionsvorrichtung 21 kann bspw. in Form eines Lichtprojektionsverfahrens arbeiten, bei dem ein Höhenprofil ermittelt wird, aus dem sich dann entsprechende Fertigungsabweichungen an dem abgelegten Fasermaterial detektieren lassen.

Wird nun mit Hilfe der Detektionseinrichtung 21 eine derartige Fertigungsabweichung detektiert, so wird dies ebenfalls an die Auswerteeinheit 19 übermittelt, die dann mit den zuvor erfassten Prozessdaten die Wissensdatenbank 20 entsprechend durch Erlernen einer Korrelation zwischen erfassten Fertigungsabweichungen und den zuvor erfassten Prozessdaten anpasst.

Des Weiteren kann die Auswerteeinheit 19 mit der Steuerung 18 kommunikativ in Verbindung stehen, um so bspw. eine von der Auswerteeinheit 19 generierte Systemreaktion an die Steuerung 18 zu übermitteln, sodass die robotische Faserlegeeinheit 11 derart verändert angesteuert wird, dass die erwartete Fertigungsabweichung verhindert oder zumindest hinsichtlich ihrer Auswirkungen verringert wird.

Darüber hinaus kann die Auswerteeinheit 19 ein Evaluationsmodul bzw. Evaluationseinheit 22 aufweisen, um die generierte Systemreaktion zuvor hinsichtlich ihrer Auswirkungen zu untersuchen.

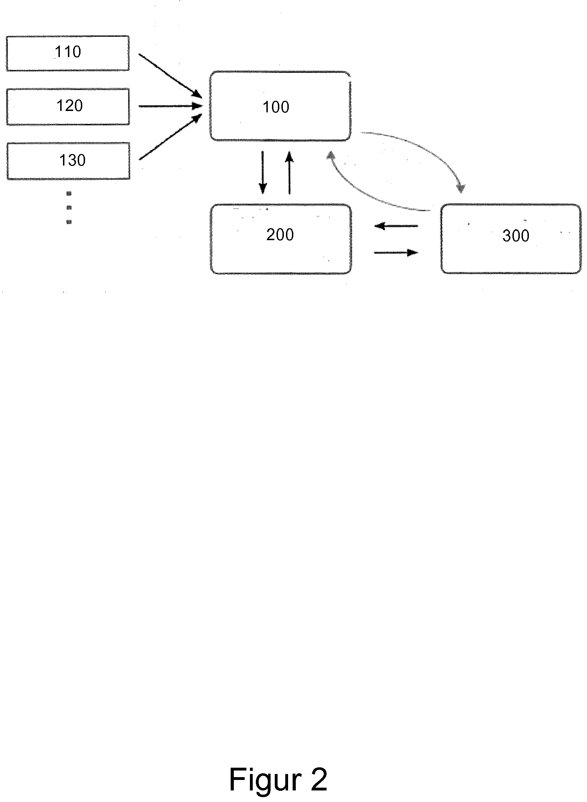

Figur 2 zeigt den strukturellen Aufbau des präventiven QS-Systems 100. Dieses System erhält vor dem Beginn des Fertigungsprozesses Daten aus dem Life Data Sheet 110, aus der Konstruktion 120 des zu fertigenden Bauteils sowie aus der Offline Programmierung 130 der Fertigungseinrichtung bzw. der resultierenden NC-Datei eines entsprechenden Bauteils. Darüber hinaus können weitere vorab verfügbare bauteil- bzw. prozessbezogene Daten an das präventive QS-System 100 übermittelt werden.

Während des Fertigungsprozesses werden in diesem System kontinuierlich bzw. annähernd kontinuierlich Daten aus dem Fertigungsprozess selbst und der Umgebung der Fertigungseinrichtung 200 übermittelt. Des Weiteren wird ein automatisiertes Online QS-System 300 verwendet, um auftretende Fertigungsabweichungen bzw. Prozessfehler zu detektieren, zu klassifizieren, zu vermessen und die gewonnenen Daten anschließend in das präventive QS-System 100 zurückzuführen. Hierdurch entsteht eine Selbstoptimierung des präventiven QS-Systems 100 durch im Fertigungsprozess auftretende Fertigungsfehler, sodass weitere Fehler und Anomalien, welche innerhalb der Anlagensteuerung auftreten, hier ebenfalls in das QS-System zurückgeführt werden. Das präventive QS-System 100 besitzt die Möglichkeit, den Fertigungsprozess direkt zu manipulieren und Einstellungen des QS-Systems gegebenenfalls anzupassen.

Der aus der Kopplung resultierende iterative Lernprozess bildet ein selbstlernendes und sich selbstoptimierendes Qualitätssicherungssystem. Es besteht hierbei die Möglichkeit, maschinelle Lernverfahren aus dem Bereich des unüberwachten Lernens zu integrieren, wodurch auch die Möglichkeit geschaffen wird, eine eigenständige Kategorisierung von Prozessfehlern auf Basis der Eingangsdaten vorzunehmen.

Es ist dabei vorteilhaft, wenn dem präventiven QS-System 100 möglichst viele heterogene Prozessdaten als Basis der Auswertung zugeführt werden. Dies sind einerseits vorab manuell selektierte und als relevant bewertete Daten. Andererseits sind dies Informationen, welche nicht offensichtlich Einfluss auf den Fertigungsprozess besitzen, aber an diesem beteiligt sind bzw. die Umgebung bilden, in welchem der Fertigungsprozess durchgeführt wird.

Ein wesentlicher Bestandteil des präventiven QS-Systems 100 ist die Wissensdatenbank, die ein Datenbanksystem zur Handhabung sehr großer Datenmengen und einer Logik zur Verarbeitung und Analyse dieser Daten enthält. Das Datenbanksystem sollte dabei in der Lage sein, sehr große Datenmengen heterogener Datentypen schnell abzulegen und nach den Kriterien der verwendeten Auswertealgorithmen wieder aufzurufen. Darüber hinaus verwaltet dieses ausgewählte Ergebnisse der Auswertelogik. Es ist zu beachten, dass zurückgeführte Ergebnisse zu einer teilweisen Restrukturierung der abgelegten Daten führen können, falls dieses für den nachfolgenden Prozess zielführend ist. Die Auswertelogik dient der Verarbeitung der generierten Daten. Ziel dieser funktionalen Einheit ist die Ermittlung von Zusammenhängen und Abhängigkeiten zwischen allen zugeführten Daten und dem Auftreten eines Prozessfehlers. Auf den Ergebnissen der Auswertelogik aufbauend generiert das System eine Systemreaktion, welche potentiell in der Lage ist, das Auftreten eines Prozessfehlers zu verhindern bzw. zu verringern.

Die generierten Reaktionsinformationen werden anschließend erneut in die Auswertelogik zurückgespielt, um so die Eignung der generierten Reaktion auf ihre Güte hinsichtlich der Vermeidung eines zukünftig auftretenden Prozessfehlers zu überprüfen. Ist dies mit großer Wahrscheinlichkeit gewährleistet, wird die berechnete Reaktion an das System übermittelt. Gilt dies nicht, so erfolgt eine erneute Generierung einer möglichen Systemreaktion. Dieser iterative Prozess wird bis zu einem vorgegebenen Abbruchkriterium wiederholt.

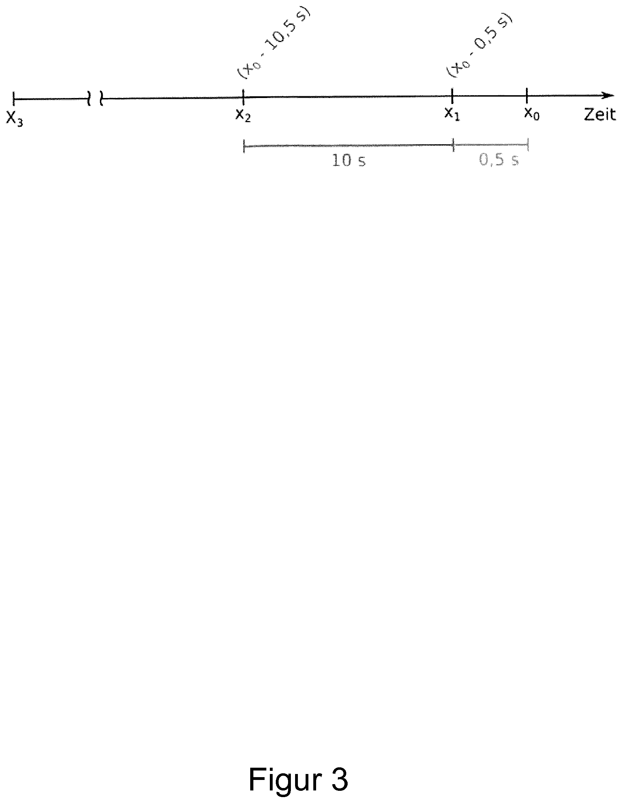

Figur 3 zeigt den zeitlichen Verlauf der einzelnen Aktionen während des Zuführens und Ablegens des Fasermaterials. Der Zeitpunkt x₀ beschreibt den Zeitpunkt der Fasermaterialablage auf einem Formwerkzeug. Dies ist der Zeitpunkt, ab dem Prozessfehler bzw. Fertigungsabweichungen bei der Ablage des Fasermaterials erst sichtbar werden. Nach diesem Zeitpunkt x₀ ist demzufolge keine Reaktion mehr auf eine mögliche fehlerhafte Ablage möglich. Dies bedeutet im Gegenzug, dass alle Prozesseingriffe und Korrekturschritte vor diesem Zeitpunkt x₀ abgeschlossen sein müssen.

Kurz vor dem Zeitpunkt x₀ liegt der Zeitpunkt x₁, was in etwa 0,3 bis 0,8 Sekunden vor dem Zeitpunkt x₀ ist. Bis zu diesem Zeitpunkt werden aktiv Daten aus dem Prozess und dessen Umgebung ermittelt und aufgezeichnet. Mit anderen Worten, ab dem Zeitpunkt x₁ bis zum Zeitpunkt x₀ erfolgt die Auswertung der zuvor erfassten Prozessdaten und das Generieren entsprechender Aktionen des präventiven QS-Systems, um einen erwarteten Fertigungsfehler bzw. eine erwartete Fertigungsabweichung ab dem Zeitpunkt x₀ verhindern oder minimieren zu können.

Im Zeitraum zwischen x₁ und x₂ wird ein Großteil der benötigten Daten gemessen, aufgezeichnet und zur weiteren Verarbeitung an die Auswerteeinheit übermittelt. Der Zeitpunkt x₂ beschreibt hierbei den Beginn des Abspulens des Fasermaterials, welches zum Zeitpunkt x₀ abgelegt wird. Vor diesem Zeitpunkt x₂ wird das Fasermaterial auf einer Materialrolle bereitgestellt. Hier besteht nur eine geringe Einflussmöglichkeit des Prozesses auf das Material bzw. die Qualität der Ablage. Im Zeitraum zwischen x₂ und x₃ werden daher nur vergleichsweise wenig Prozessdaten aufgezeichnet. Hier werden vorwiegend Statusdaten für z.B. Werkzeuge aufgezeichnet, welche sich gegebenenfalls auf nachfolgende Zeitpunkte beziehen. Der Zeitraum zwischen x₁ und x₂ kann zwischen 5 bis 15 Sekunden betragen, je nachdem, wie lang die Strecke zwischen Fasermagazin und Faserlegekopf ist und in welcher Geschwindigkeit das Fasermaterial abgelegt wird.

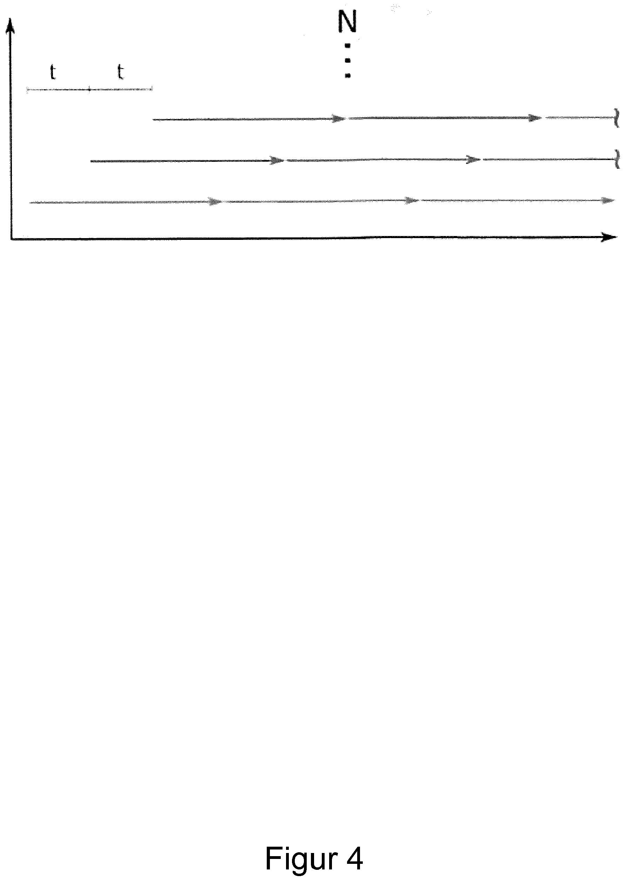

Es ist zu beachten, dass die in der Figur 3 beschriebene Abfolge immer nur für einen kleinen Abschnitt von Fasermaterial Gültigkeit besitzt. Dies bedeutet, dass der beschriebene Zyklus quasi kontinuierlich abläuft und auch quasikontinuierlich, in sehr kurzen Zeitabständen immer wieder erneut gestartet werden muss. Dies bedeutet, dass viele Betrachtungszyklen parallel ablaufen müssen, um einen betrachteten Fasermaterialabschnitt möglichst klein zu halten und die Auflösung des präventiven QS-Systems möglichst klein zu diskretisieren. Dieses Vorgehen der einzelnen Betrachtungszyklen ist exemplarisch in der Figur 4 visualisiert.

Die einzelnen Pfeile beschreiben hierbei jeweils einen der parallel ablaufenden Betrachtungszyklen. In der Berechnung werden diese als getrennte Tasks ausgeführt. Der Parameter t beschreibt die verstrichene Zeit zwischen den einzelnen Startpunkten. Dieser Wert beschreibt somit auch die Länge eines betrachteten Fasermaterialfragments bzw. eines Fasermaterialabschnittes. Werden weiterhin ablaufende Tasks hinzugefügt, so kann der Parameter t kleiner gewählt werden. Die Länge des Offsets zwischen Betrachtungsabschnitten wird somit verkürzt, was wiederum die Auflösung des Systems erhöht.

Die oben beschriebene Betrachtung der planenden Prozessschritte deutlich vor dem Zeitpunkt x₃ wird hierbei auf andere Weise durchgeführt. Ziel dieser Analyse ist die Generierung von Eingangsdaten für das präventive QS-System, welches vorab bereits kritische Bereiche im produzierenden Prozess identifiziert und bewertet. Diese Analyse kann manuell unterstützt werden, sollte allerdings vorwiegend automatisiert durchgeführt werden. Dieser vorgeschaltete Analyseschritt bringt zwei entscheidende Vorteile mit sich. Zum einen werden potentiell kritische Ablegepfade und Ablegebewegungen vor der Materialablage aufgezeigt und können gegebenenfalls korrigiert werden. Zum anderen besteht die Möglichkeit, diese Analyse manuell zu erweitern. Maschinell ermittelte, potentiell kritische Ablagebereiche können gezielt durch eine Fachkraft betrachtet werden. Änderungen, welche aus dieser automatisierten Kennzeichnung hervorgeht, können somit direkt und nachvollziehbar dokumentiert werden. Ist eine Änderung nicht möglich, kann dies ebenfalls direkt begründet werden und trägt zur vollständigen Dokumentation des Gesamtprozesses bei. Darüber hinaus besteht hier die Möglichkeit, subjektive Erfahrungen im präventiven QS-System zu hinterlegen. Es ist jedoch außerordentlich wichtig, die maschinell generierten Einschätzungen und die Bewertung der Fachkraft voneinander zu trennen. Manuell eingebrachte Daten dienen vorwiegend der nachvollziehbaren Prozessdokumentation und nur sehr eingeschränkt der Beeinflussung des präventiven QS-Systems. Andernfalls besteht die Möglichkeit der Systembeeinflussung aus anderen gegebenenfalls strategischen Gründen, welche jedoch an anderer Stelle in den Prozess eingebracht und begründet werden müssen. Als Prozessdaten, die als Eingangsdaten für das präventive QS-System dienen, können bspw. Positions- und Geschwindigkeitsdaten des TCP des Roboters, Kräfte, Winkel und Winkelgeschwindigkeiten der robotischen Achsen, Informationen über die verwendeten Heizparameter, Förderdaten das Materials, Werkstückinformationen und die Systemzeit dienen. Verfährt der TCP eine Faserlegeeinheit bspw. in einer bestimmten Kombination aus Richtungsänderungen gekoppelt mit speziellen Beschleunigungen bei einer unveränderten oder unzureichend angepassten Materialfördergeschwindigkeit, so entsteht bspw. ein Faltenfehler. Als QS-Sensorik im Nachlauf wird ein Laserlichtschnittsensor, wie er aus dem Stand der Technik bekannt ist, verwendet. Dieser spielt die Art des aufgetretenen Prozessfehlers und dessen Abmaße in Höhen-, Breiten- und Tiefenrichtung zurück in das präventive QS-System.

Über diese Informationen ist ein überwachtes, eigenständiges Lernen und Optimieren der Auswerteeinheit möglich. Für das beschriebene unüberwachte Lernen können in einem erweiterten Entwicklungsschritt die grob aufbereiteten, aber nicht kategorisierten Fehlerdaten des QS-Sensorsystems verwendet werden.

Die Auswertung aller gesammelten Prozessdaten des präventiven QS-Systems kann über ein künstliches neuronales Netz erfolgen. Dieses stellt ein Verfahren aus dem Bereich des maschinellen Erlernens dar und ermöglicht die Auswertung sehr großer und komplexer Datenmengen. Um die Funktionalität eines selbstlernenden Systems bereitzustellen und die beschriebene Selbstoptimierung durchzuführen, wird bspw. ein Multilayer Backpropagation künstliches neuronales Netz verwendet. Als Instanz zur Verwaltung der generierten Datenmengen wird ein Datenbanksystem auf Basis des HDF5 Datenformats verwendet. Dieses erfüllt die beschriebene Anforderung des Speicherns und Verwaltens vieler heterogener Daten.

Bei einer Ablegegeschwindigkeit von 1 m/s reicht dabei eine Rechenzeit von 0,5 Sekunden und eine Datenerhebungsphase von ca. 10 Sekunden Länge aus, um entsprechende zu erwartende Fertigungsabweichungen detektieren zu können.

### Bezugszeichenliste

- 10: Fertigungsanlage
- 11: robotische Faserlegeeinheit
- 12: Bewegungsautomatik
- 13: Faserlegekopf
- 14: Fasermaterialspeicher
- 15: Fasermaterial
- 16: Formwerkzeug
- 17: Faserlaminat
- 18: Anlagensteuerung
- 19: Auswerteeinheit
- 20: Wissensdatenbank
- 21: Detektionsvorrichtung
- 22: Evaluationseinheit
- 100: präventives QS-System
- 110: Daten aus dem Life Data Sheet
- 120: Daten aus der Bauteilkonstruktion
- 130: Daten aus der Offline-Programmierung
- 200: Fertigungseinrichtung und Fertigungsumgebung
- 300: automatisiertes Online QS-System

## Patentansprüche

1. Verfahren zur Herstellung eines Faserlaminates (17) aus einem Fasermaterial (15) eines Faserverbundwerkstoffes zur Herstellung eines Faserverbundbauteils mittels einer Fertigungsanlage (10), wobei das Verfahren die folgenden Schritte umfasst:
- Zuführen von Fasermaterial (15) von mindestens einem Fasermaterialspeicher (14) der Fertigungsanlage (10) zu mindestens einem Faserlegekopf (13) der Fertigungsanlage (10) und
- Ablegen des zugeführten Fasermaterials (15) mittels des Faserlegekopfes (13) auf eine formgebende Werkzeugoberfläche,
- wobei während des Zuführens und/oder Ablegens des Fasermaterials (15) kontinuierlich Prozessdaten der Fertigungsanlage (10) erfasst werden,
**gekennzeichnet durch**
- Zuführen der erfassten Prozessdaten einer Auswerteeinheit (19), die eine Wissensdatenbank enthält, in der detektierte Fertigungsabweichungen von abgelegtem Fasermaterial (15) mit Prozessdaten der Fertigungsanlage (10) korreliert sind, die sich auf einen bezüglich des Auftretens der jeweiligen Fertigungsabweichung vorhergehenden Zeitpunkt und/oder Zeitraum beim Zuführen und/oder Ablegen des Fasermaterials (15) beziehen, und
- Feststellen einer zu erwartenden Fertigungsabweichung durch Eingeben der erfassten Prozessdaten in die Wissensdatenbank mit der enthaltenen Korrelation.

2. Verfahren nach Anspruch 1, **dadurch gekennzeichnet, dass**
- mittels einer Detektionsvorrichtung (21) während des Ablegens des Fasermaterials (15) mindestens eine Fertigungsabweichung bei bereits abgelegtem Fasermaterial (15) detektiert wird,
- die detektierte Fertigungsabweichung und die erfassten Prozessdaten, die sich auf den ... vorhergehenden Zeitpunkt und/oder Zeitraum bei Zuführen und/oder Ablegen des Fasermaterials (15) beziehen, der Auswerteeinheit (19) zugeführt wird, und
- mittels der Auswerteeinheit (19) eine Korrelation zwischen der detektierten Fertigungsabweichung und den erfassten Prozessdaten in der Wissensdatenbank erstellt wird.

3. Verfahren nach Anspruch 2, **dadurch gekennzeichnet, dass** die Korrelation in der Wissensdatenbank der Auswerteeinheit (19) durch ein maschinelles Lernverfahren erstellt wird.

4. Verfahren nach einem der vorhergehenden Ansprüche, **dadurch gekennzeichnet, dass** der Auswerteeinheit (19) weiterhin Daten aus dem Life Data Sheet (110) des herzustellenden Bauteils, Daten aus der Bauteilkonstruktion (120), Daten aus der Ablageprogrammierung und/oder andere prozessbezogene Daten bereitgestellt werden oder sind.

5. Verfahren nach einem der vorhergehenden Ansprüche, **dadurch gekennzeichnet, dass** mittels der Auswerteinheit bei Feststellung einer zu erwartenden Fertigungsabweichung eine Systemreaktion zur Vermeidung oder Verringerung der zu erwartenden Fertigungsabweichung generiert und die Fertigungsanlage (10) basierend auf der generierten Systemreaktion zur Vermeidung oder Verringerung der zu erwartenden Fertigungsabweichung angesteuert wird.

6. Verfahren nach Anspruch 5, **dadurch gekennzeichnet, dass** die generierte Systemreaktion mittels einer Evaluationseinheit (22) hinsichtlich ihrer Eignung zur Vermeidung oder Verringerung der zu erwartenden Fertigungsabweichung evaluiert wird.

7. Verfahren nach einem der vorhergehenden Ansprüche, **dadurch gekennzeichnet, dass** Prozessdaten bis weniger als 1 Sekunde, vorzugsweise bis weniger als 0,5 Sekunden und/oder Prozessdaten ab 15 Sekunden, vorzugsweise ab 12 Sekunden, vor der Ablage eines konkreten Fasermaterialabschnittes zur Feststellung einer zu erwartenden Fertigungsabweichung berücksichtigt werden.

8. Verfahren nach einem der vorhergehenden Ansprüche, **dadurch gekennzeichnet, dass** eine Vielzahl von Fasermaterialabschnitten, die hintereinander abgelegt werden sollen, bezüglich einer zu erwartenden Fertigungsabweichung parallel überwacht werden.

9. Fertigungsanlage (10) zur Herstellung eines Faserlaminates (17) aus einem Fasermaterial (15) eines Faserverbundwerkstoffes zur Herstellung eines Faserverbundbauteils, **dadurch gekennzeichnet, dass** die Fertigungsanlage (10) zur Durchführung des Verfahrens nach einem der vorhergehenden Ansprüche eingerichtet ist.
